(19) Europäisches Patentamt
European Patent Office
Office européen des brevets

(11) Veröffentlichungsnummer: **0 050 221**
**A1**

(12) # EUROPÄISCHE PATENTANMELDUNG

(21) Anmeldenummer: **81107475.6**

(22) Anmeldetag: **21.09.81**

(51) Int. Cl.³: **C 08 K 5/34**, C 08 L 55/02

(30) Priorität: **16.10.80 DE 3039095**

(43) Veröffentlichungstag der Anmeldung: **28.04.82 Patentblatt 82/17**

(84) Benannte Vertragsstaaten: **BE DE FR GB IT NL**

(71) Anmelder: **BASF Aktiengesellschaft, Carl-Bosch-Strasse 38, D-6700 Ludwigshafen (DE)**

(72) Erfinder: **Brandstetter, Franz, Dr., Ritterbuechel 45, D-6730 Neustadt (DE)**
Erfinder: **Lindenschmidt, Gerhard, Dr., Buchenweg 11, D-6906 Leimen (DE)**
Erfinder: **Naarmann, Herbert, Dr., Haardtblick 15, D-6719 Wattenheim (DE)**
Erfinder: **Penzien, Klaus, Dr., Bensheimer Ring 18, D-6710 Frankenthal (DE)**
Erfinder: **Stabenow, Joachim, Dr., Am Feldrain 22, D-6940 Weinheim (DE)**

(54) **Thermoplastische Formmassen und Formteile aus diesen.**

(57) Die Erfindung betrifft eine thermoplastische Formmasse, die ein thermoplastisches Harz A, ein Brandschutzmittel B und einen Synergisten C für das Brandschutzmittel enthält. Weiter können übliche Zusatzstoffe zugegen sein.

Das Brandschutzmittel B ist eine im wesentlichen 2 Bestandteile $b_1$) und $b_2$) enthaltende Mischung Chlor und/oder Brom enthaltender s-Triazinverbindungen, die 48 bis 62 Gew.-% der Verbindung $b_1$) enthält und von denen

$b_1$) eine Trisphenoxy-s-triazinverbindung der Formel

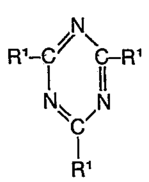

darstellt und

$b_2$) der Formel

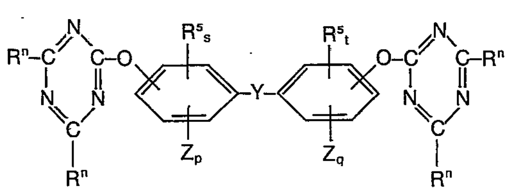

genügt, wobei die Reste die folgenden Bedeutungen haben:

$R^n$: OH, $R^1$, $R^2$ oder $R^3$

$R^1$: 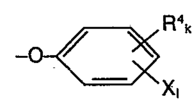

$R^4$: niedere Alkylgruppe oder niedere Halogenalkylgruppe

X: Br oder Cl

k, l: 0 oder eine ganze Zahl von 1 bis 5

$k+l = 5$

$R^2$: 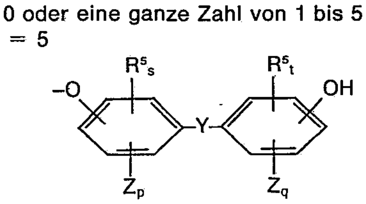

$R^5$: eine niedere Alkylgruppe oder eine niedere Halogenalkylgruppe

Z: Br oder Cl

p, q: 0 oder eine ganze Zahl von 1 bis 4

s, t: 0 oder eine ganze Zahl von 1 bis 4

$p+q+s+t \leq 8$

$l+p+q \geq 2$

(Fortsetzung nächste Seite)

EP 0 050 221 A1

Y: eine niedere Alkylengruppe, eine niedere Halogenalkylengruppe oder eine niedere Alkylidengruppe oder $-SO_2-$, $-SO-$, $-S-$, $-O-$, $-CO-$ oder eine direkte Bindung

$R^3$: 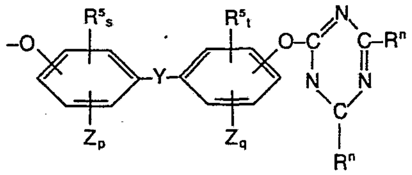

$R^n$, $R^5$, Z, Y, p, q, s, t: wie oben angegeben.

0050221



# Thermoplastische Formmassen und Formteile aus diesen

Die Erfindung betrifft selbstverlöschende thermoplastische Formmassen, die nach einer Zündung mit einer heißen Flamme nicht brennend abtropfen, d.h. in eine der Brandklassen 94VE-0 oder 94VE-1 eingeordnet werden können. Die erfindungsgemäßen Formmassen enthalten ein thermoplastisches Harz, als Flammschutzmittel eine Mischung von Verbindungen auf Basis von Halogen enthaltenden s-Triazinverbindungen, Synergisten für das Flammschutzmittel sowie gegebenenfalls Zusatzstoffe.

Zum Stand der Technik verweisen wir auf:

(1) US-PS 3 843 650
(2) DE-OS 27 27 650
(3) US-PS 4 143 221
(4) J. Green, SPI National Plastics Exposition Conference Mc Cormid Place, Chicago, Juni 1979
(5) Vogel "Flammfestmachen von Kunststoffen", Hüthig-Verlag, (1966), Seiten 94 bis 102

Die Flammfestausrüstung von thermoplastischen Kunststoffen mit halogenhaltigen organischen Verbindungen ist aus (5) bekannt. Man weiß auch, daß bei Anwendung verhältnismäßig großer Mengen an Flammschutzmitteln und unter gleichzeitiger Verwendung von Synergisten, wie Verbindungen des Antimons, des Arsens, des Bors oder des Zinns, die Thermoplaste nach Entzündung mit einer heißen Flamme nicht brennend abtropfen. Bekannt ist auch, daß niedermolekulare halogenhaltige Flammschutzmittel zum Ausblühen neigen, was bei polymeren halogenhaltigen Flammschutzmitteln nicht beobachtet wird (vgl. 3).

Vo/BL

Aus (1) ist das monomere substituierte halogenhaltige s-Triazin, das in den aus (2) bekannten Formmassen in kleinen Anteilen ebenfalls enthalten ist, bekannt. Die in (2) beschriebenen halogenhaltigen s-Triazinverbindungen sind weit überwiegend oligomer und verhalten sich migrationsfest. Werden unter Verwendung der bekannten Flammschutzmittel aus selbstverlöschenden ABS-Massen Formteile hergestellt und gelagert, so beobachtet man im Falle der Verwendung niedermolekularer halogenhaltiger s-Triazinverbindungen nach (1) je nach Art einen mehr oder weniger starken Oberflächenbelag, der vor allem bei dunklen Einfärbungen störend wirkt. Im Falle der Verwendung ausschließlich oligomerer bzw. hochmolekularer halogenhaltigen s-Triazinverbindungen wird dagegen ein ungünstiges Bruchverhalten festgestellt. Der Erfindung lag die Aufgabe zugrunde, selbstverlöschende, nicht brennend abtropfende thermoplastische Formmassen, insbesondere auf Basis von ABS zu entwickeln, die zu Formteilen mit einer guten Zähigkeit und gleichzeitig einer belagfreien Oberfläche führen, wobei als Basis für das Flammschutzmittel die an sich aus (2) bzw. (1) bekannten Verbindungen in Frage kommen. Die Aufgabe wird gelöst durch die Maßnahmen gemäß kennzeichnendem Teil des Patentanspruchs 1. Die Erfindung betrifft somit eine thermoplastische Formmasse, enthaltend

A wenigstens ein thermoplastisches Harz,

B 2 bis 35 Gewichtsteile, bezogen auf 100 Gewichtsteile A, eines Brandschutzmittels, d.i. einer im wesentlichen 2 Bestandteile $b_1$) und $b_2$) enthaltenden Mischung Chlor und/oder Brom enthaltender s-Triazinverbindungen von denen

$b_1$) eine Trisphenoxy-s-triazinverbindung der Formel

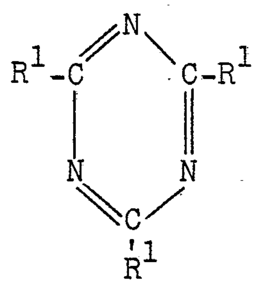

darstellt, und

$b_2$) der Formel

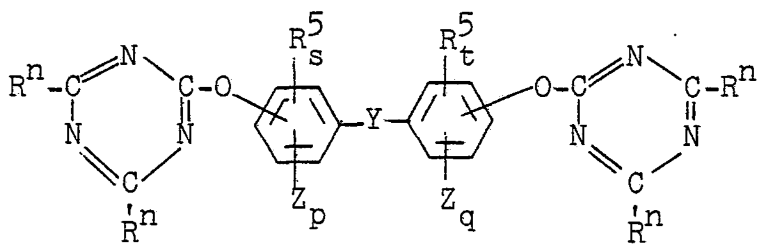

genügt, wobei die Reste die folgenden Bedeutungen haben:

$R^n$: OH, $R^1$, $R^2$ oder $R^3$.

$R^1$: 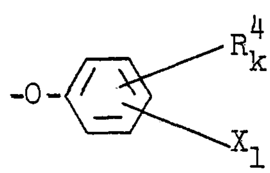

$R^4$: niedere Alkylgruppe oder niedere Halogenalkylgruppe

X: Br oder Cl

k,l: 0 oder eine ganze Zahl von 1 bis 5

k+l = 5

$R^2$: 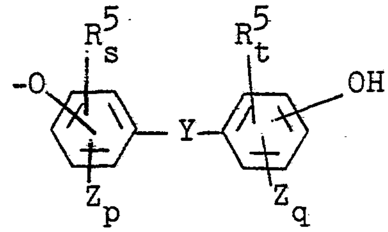

$R^5$: eine niedere Alkylgruppe oder eine niedere Halogenalkylgruppe

Z: Br oder Cl

p,q: 0 oder eine ganze Zahl von 1 bis 4

s,t: 0 oder eine ganze Zahl von 1 bis 4

$$p + q + s + t \leq 8$$
$$1 + p + q \geq 2$$

Y: eine niedere Alkylengruppe, eine niedere Halogenalkylengruppe oder eine niedere Alkylidengruppe, oder $-SO_2-$, -SO-, -S-, -O-, -CO- oder eine direkte Bindung

$R^3$: 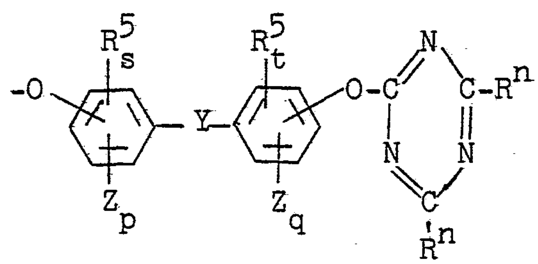

$R^n$, $R^5$, Z, Y, p, q, s, t: wie oben angegeben

C 1 bis 10 Gewichtsteile, bezogen auf 100 Gewichtsteile A, eines üblichen Synergisten für das Flammschutzmittel, gegebenenfalls enthaltend

D übliche Zusatzstoffe in wirksamen Mengen,

dadurch gekennzeichnet, daß als Brandschutzmittel eine Mischung verwendet wird, die einen Anteil von 40 bis 62 Gew.% der Verbindung $b_1$), bezogen auf $b_1$) und $b_2$), aufweist.

Nachstehend werden die Komponenten der erfindungsgemäßen Formmasse und die Herstellung der Formmasse beschrieben:

Komponente A:

Die Komponente A der erfindungsgemäßen Formmassen soll wenigstens ein thermoplastisches Harz sein. Harze dieser Art sind im Handel erhältlich. Dieses thermoplastische Harz kann ein Homo- oder Copolymerisat eines thermoplastischen Kunststoffes sein. Es können auch Mischungen verschiedener thermoplastischer Kunststoffe, die nachstehend aufgeführt sind, verwendet werden. Als thermoplastische Kunststoffe kommen in Betracht Polystyrol bzw. insbesondere Copolymerisate des Styrols mit Acrylnitril, sowie die Copolymerisate von $\alpha$-Methylstyrol und Acrylnitril bzw. ternäre Systeme aus Styrol/$\alpha$-Methylstyrol und Acrylnitril. Bevorzugt werden die vorstehend genannten Copolymerisate in Verbindung mit einer Kautschukgrundlage angewendet, worauf die Monomeren des die Matrix bildenden Copolymerisates aufgepfropft worden sind. Die erwähnten Pfropfmischpolymerisate können gegebenenfalls durch Einstellen eines gewünschten Kautschukgehalts mit den Copolymerisaten, die vorstehend erwähnt sind und die Pfropfmonomeren darstellen, als Hartmatrix abgemischt werden. Bevorzugt werden daher schlagfeste Thermoplaste, wie schlagfestes Polystyrol und schlagfeste Acrylnitril-Styrol-Copolymerisate, die als weitere Komponente einen gepfropften Kautschuk auf Acrylat- oder EPDM-Basis enthalten können. Als Kautschuke zur Verstärkung dieser Thermoplaste können neben den Acrylat- oder EPDM-Kautschuken auch Mischpolymerisate des Butadiens

oder Isoprens mit 10 bis 70 Gew.% Styrol in Frage kommen. Vorzugsweise verwendet man als Mischpolymerisate des Butadiens oder Isoprens Copolymerisate der allgemeinen Formel $(XY)_n$ oder $(X-Y)_n-X$, wobei X Styrol, Y Butadien oder Isopren und n eine ganze Zahl zwischen 1 und 3 ist. Bezogen auf 100 Gewichtsteile Polystyrol bzw. Copolymerisat, sollen 2 bis 20, vorzugsweise 3 bis 12 Teile des Kautschuks eingearbeitet werden. Die Menge an Kautschuk richtet sich nach der gewünschten Zähigkeit der thermoplastischen Formmasse.

Besonders bevorzugt werden als Komponenten A der erfindungsgemäßen Formmassen schlagfeste Thermoplaste auf Basis ABS angewendet. Diese ABS-Massen enthalten in der Regel überwiegend Polybutadien als Kautschuk, auf den Styrol und Acrylnitril als Monomere aufgepfropft sind, und die, je nach Art der Herstellung, gegebenenfalls noch separates Copolymerisat enthalten können. Im Sinne der vorliegenden Erfindung sollen unter ABS-Harzen auch Mischungen verstanden werden, die die Hartkomponenten Poly-(Acrylnitril-α-Methylstyrol), Poly-(Styrol-α-Methylstyrol-Acrylnitril), Poly-(Styrol-Acrylnitril-Methylmethacrylat) und Poly-(Styrol--Maleinsäureanhydrid) enthalten bzw. Mischungen aus zwei oder mehreren der vorstehend genannten Hartkomponenten. Im allgemeinen handelt es sich dabei um ein ABS, das durch die Pfropfung eines Emulsionskautschuks und durch Einstellen des gewünschten Kautschukgehalts mit entsprechenden Hartkomponenten erhalten wird. Ferner kann es sich im Sinne der vorliegenden Erfindung um ABS-Harze handeln, die durch Polymerisation von Styrol/Acrylnitril zusammen mit bis zu 70 Gewichtsteilen an Comonomeren wie α-Methylstyrol, Methylmethacrylat oder Maleinsäureanhydrid in Gegenwart von 2 bis 20, vorzugsweise 8 bis 18 Gewichtsteilen eines Butadienkautschuks, der bis zu 50 Gewichtsteilen Comonomerblöcke auf Basis von Styrol, enthalten kann, hergestellt worden sind.

Auch Mischungen von ABS-Harzen, die nach verschiedenen Verfahren hergestellt worden sind, bzw. unterschiedliche Zusammensetzung aufweisen, können angewendet werden.

Komponente B

Als Komponente B der erfindungsgemäßen thermoplastischen Formmasse kommt die unter $b_1$) bzw. $b_2$) genannte Mischung von Chlor und/oder Brom enthaltenden s-Triazinverbindungen in Betracht, wobei die niedermolekulare Verbindung $b_1$) lediglich in einem Anteil von 48 bis 62 Gew.%, bezogen auf das insgesamt angewendete Flammschutzmittel (Summe von $b_1$) und $b_2$)), vorhanden sein darf. Die erfindungsgemäß anzuwendende Flammschutzmittel-Mischung auf Basis von niedermolekularen und oligomeren bzw. höhermolekularen Halogen enthaltenden s-Triazinderivaten kann nach dem in (2) beschriebenen Verfahren direkt hergestellt werden. Es ist dabei zu beachten, daß im Unterschied zu dem bekannten Verfahren das Molverhältnis Triazin : Bisphenol im Bereich von 3,8 bis 5 liegen soll. Besonders bevorzugt werden Mischungen hergestellt, die Brom als Halogenatom aufweisen. Bei der Umsetzung von Cyanurchlorid mit einem halogenierten bzw. bromierten Phenolat ist darauf zu achten, daß die Menge an bromiertem Phenolat so bemessen wird, daß im Endprodukt praktisch kein Chlor ($\leq$ 1,5 %) nachweisbar ist. Bezüglich der Einsatzstoffe des Verfahrens zur Herstellung der Komponente B der erfindungsgemäßen Stoffmischung wird auf die in (2) beschrie-benen möglichen Variationen verwiesen. Die beiden Hauptbestandteile der Stoffmischung, nämlich die Komponenten $b_1$) und $b_2$), dürfen nur in den in Anspruch genannten Grenzen im Bereich von 48 bis 62 % jeweils bezogen auf die Summe von $b_1$) und $b_2$), angewendet werden. Die Festlegung der Grenzen in diesem Bereich basiert auf der Synthese der Mischung im vorstehend genannten Molverhältnis Triazin:Bisphenol. Werden mehr als

62 Gew.% der Komponente $b_1$), bezogen auf die Mischung, als Flammschutzmittel angewendet, so tritt die Bildung eines Oberflächenbelags auf ABS ein; bei Verwendung von $b_1$) in Mengen von unterhalb 48 Gew.%, bezogen auf die Mischung, fällt die Schlagzähigkeit auf nicht vertretbare Werte ab. Das Flammschutzmittelsystem $b_1$) + $b_2$) wird in Mengen von 2 bis 35 Gewichtsteilen, vorzugsweise in Mengen von 8 bis 25 Gewichtsteilen, jeweils bezogen auf 100 Gewichtsteile des thermoplastischen Harzes (Komponente A der thermoplastischen Formmasse), angewendet.

Komponente C:

Als Komponente C der erfindungsgemäßen Formmassen werden die üblichen Synergisten in Mengen von 2 bis 10 Gewichtsteilen, vorzugsweise in Mengen von 3 bis 7 Gewichtsteilen, jeweils bezogen auf 100 Gewichtsteile des thermoplastischen Harzes (Komponente A), angewendet. Vorzugsweise werden Antimontrioxid oder Zinn-IV-oxid als Synergisten angewendet. Es können jedoch auch alle anderen, bekannten Synergisten in wirksamen Mengen angewendet werden.

Komponente D:

Die erfindungsgemäßen Formmassen können gegebenenfalls übliche Zusatzstoffe in wirksamen Mengen enthalten (Komponente D der erfindungsgemäßen Formmassen). Als Zusatzstoffe kommen bekannte und bewährte Stabilisatoren, wie sterisch gehinderte Phenole und organische Phosphite in Betracht, die in üblichen Mengen von jeweils 0,01 bis 0,5 Teilen, bezogen auf das thermoplastische Harz, angewendet werden. Ferner sind anwendbar Füllstoffe, Farbpigmente, Gleitmittel, Weichmacher, Antistatika oder Treibmittel in üblichen, dem Fachmann bekannten Mengen.

Herstellung der Formmasse:

Die Einarbeitung des Flammschutzmittels, des Synergisten sowie der eventuell verwendeten Zusatzstoffe in das thermoplastische Harz kann nach geeigneten und bekannten Mischverfahren, z.B. in Extrudern, Knetern oder auf Walzen erfolgen. Insbesondere können die Komponenten B, C und D auch in Form eines Konzentrates in dem gewünschten Thermoplasten in Granulat- oder Pulverform in einen weiteren Teil des Thermoplasten eingearbeitet werden, um die gewünschte Zusammensetzung zu erzielen.

Die erfindungsgemäßen Formmassen können durch Spritzgießen, Schaumpressen oder durch Extrusion zu selbstverlöschenden Formkörpern verarbeitet werden.

Bei der Ausrüstung von ABS-Harzen (A) mit den halogenierten Triazinverbindungen (B) läßt sich eine besonders gute Mechanik der Formkörper bei gleichzeitiger Migrationsfreiheit dann erzielen, wenn die Triazinverbindungen (B) 48 bis 62 Gew.% der niedermolekularen Verbindung $b_1$), bezogen auf das insgesamt angewendete Flammschutzmittel (Summe aus $b_1 + b_2$), enthalten.

Die %-Gehalte an Tris(tribromphenoxy)-s-triazin $b_1$) im bromierten Triazingemisch (B) lassen sich nach folgender Gleichung berechnen:

$$\text{\%-Gehalt } b_1) = \frac{(M-2) \cdot 100 \cdot 1068}{(M-2) \cdot 1068 + 2018}$$

Hierbei bedeutet M das Molverhältnis von Cyanurchlorid zu Tetrabrombisphenol A. Nach Molgewichtsbestimmungen des Reaktionsgemisches gilt diese Gleichung mit guter Näherung

für M $\geqq$ 2, wobei Tribromphenolnatrium als weiterer Reaktionspartner diente.

Die Flammschutzprüfung erfolgte im vertikalen Brandtest nach den Vorschriften der Underwriter Laboratories zwecks Einordnung in eine der Brandklassen 94VE-0, 94 VE-1 oder 94 VE-2.

Zur Prüfung der mechanischen Eigenschaften der erfindungsgemäßen Formmassen wurden aus diesen auf einer Spritzgußmaschine vom Typ Arburg Allrounder 200 bei 250°C Rundscheiben von 2 mm Dicke und 60 mm Durchmesser hergestellt.

Die Schädigungsarbeit in Nm beim Stoßversuch wurde an solchen Proben nach DIN 53 443, Blatt 1, bei 23°C ermittelt.

Zur Prüfung der Oberflächenbelagsbildung an Formteilen aus den erfindungsgemäßen Formmassen und an solchen aus Vergleichsversuchen wurden bei 230°C Preßplatten mit den Abmessungen 100 x 100 x 2mm hergestellt. Die Aufheizzeit betrug 3 Minuten, die Preßzeit bei 230°C 8 Minuten. Die Preßplatten wurden bei 60°C in einem Trockenschrank gelagert. Nach bestimmten Zeitabschnitten wurde visuell kontrolliert, ob sich ein Oberflächenbelag gebildet hatte oder nicht.

Für die in den Beispielen und Vergleichsversuchen beschriebenen Formmassen wurden die folgenden Flammschutzmittel bzw. Flammschutzmittelmischungen nach dem aus (2) bekannten Verfahren aus unterschiedlichen Mengen Cyanurchlorid, Tetrabrombisphenol A, Tribromphenol und Natronlauge hergestellt. In der Tabelle 1 ist das Molverhältnis Cyanurchlorid zu Tetrabrombisphenol A angegeben. Ebenfalls in der Tabelle ist die Zusammensetzung der Mischung $b_1$)

und $b_2$) des Flammschutzmittels angegeben. Die Gewichtsprozente $b_1$) in Tabelle 1 wurden unter der Annahme ermittelt, daß im wesentlichen Mischungen aus den zwei nachfolgend genannten Reaktionsprodukten folgender Struktur entstehen.

2,4,6-Tris(tribromphenoxi)-1,3,5-s-triazin

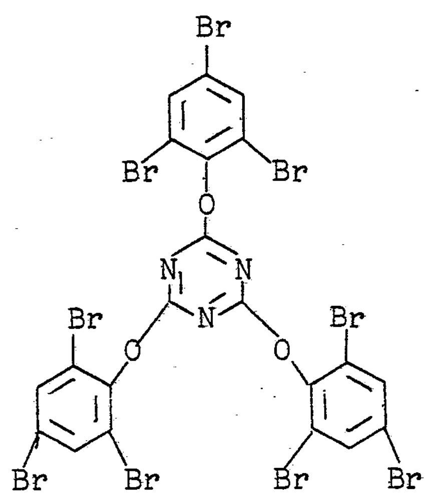

MG 1068

und "Oligomeres" Triazinderivat

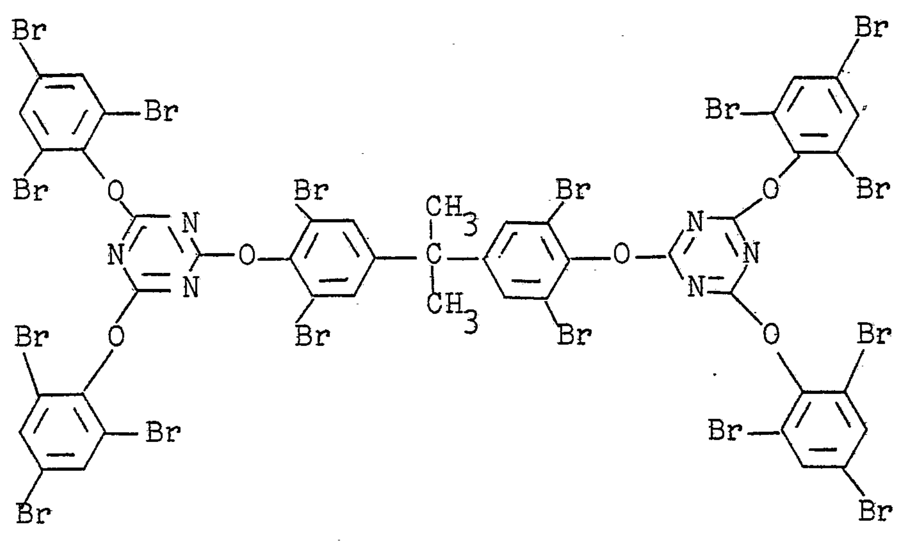

MG 2018

Dabei ist zu beachten, daß die Anzahl von OH-Gruppen aus bromiertem Bisphenol A und Phenol der Anzahl von Chloratomen im Cyanurchlorid entspricht, wobei eine der bei der Kupplung entstehende Salzsäure äquivalente Menge Natronlauge eingesetzt wird.

Die Erfindung wird nachstehend anhand von Beispielen und Vergleichsversuchen näher erläutert. Die in den Beispielen genannten Teile und Prozente beziehen sich, sofern nichts anderes vermerkt ist, auf das Gewicht.

Beispiele 1 bis 5

Zur Herstellung der erfindungsgemäßen Formmassen wurden 4 Gewichtsteile Antimontrioxid zusammen mit den in der Tabelle 2 genannten Mengen an Flammschutzmitteln in einem Mischer bei 40°C vermengt. Das Gemisch aus Flammschutzmittel und Synergist wurde dann bei 230°C zusammen mit den in der Tabelle 2 genannten Mengen eines ABS-Harzes, das aus 23 Gewichtsteilen Polybutadien und 78 Gewichtsteilen eines Poly-Styrol-Acrylnitril aufgebaut war, auf einem Extruder aufgeschmolzen, homogenisiert und anschließend granuliert. Danach wurden durch Spritzgießen bzw. Pressen Prüfkörper hergestellt und an diesen das Brandverhalten, die Schädigungsarbeit sowie das Migrationverhalten studiert.

Vergleichsversuche 1 bis 6

Wie in den Beispielen beschrieben, wurden zum Vergleich thermoplastische Formmassen unter Verwendung der nicht erfindungsgemäßen Flammschutzmittelmischung hergestellt. Die Eigenschaften, die diese Vergleichsproben aufwiesen, sind ebenfalls mit in der Tabelle 2 aufgenommen. Ein Vergleich der Meßergebnisse an erfindungsgemäßen Formmassen

(vgl. Beispiele 1 bis 5) mit Massen, die nicht gemäß der Erfindung flammfest ausgerüstet wurden, ergibt, daß durch die erfindungsgemäße Anwendung der Flammschutzmittelkombinationen aus den Bestandteilen $b_1$ und $b_2$ eine thermoplastische Formmasse mit guter mechanischer Festigkeit frei von Migrationsbelägen erhalten wird.

Tabelle 1

| Bezeichnung | Bisphenol | Molverhältnis M Cyanurchlorid/Bisphenol | $b_1$ [Gew.-%] |
|---|---|---|---|
| I | Tetrabrombisphenol A | 2 | 0 |
| II | " | 2,22 | 10,5 |
| III | " | 2,5 | 20,9 |
| IV | " | 3,8 | 48,8 |
| V | " | 4 | 51,4 |
| VI | " | 4,5 | 56,9 |
| VII | " | 5 | 61,3 |
| VIII | " | 6 | 67,9 |
| IX | " | 7 | 72,5 |
| X | " | 8 | 76 |
| XI | " | $\infty$ | 100 |
| XII | Tetrabrombisphenol S | 2 | 0 |
| XIII | " | 4 | 51,1 |

0050221

Tabelle 2

| Beispiele | Flammschutzmittel [Gew.-Teile] | Synergist [Gew.-Tle.] Antimontrioxid | ABS [Gew.-T.] | Schädigungsarbeit nach DIN 53 443 | Oberflächenbelag | Brandklasse |
|---|---|---|---|---|---|---|
| 1 | IV | 18,4 | 4 | 77,6 | 13 | nein | VE-0 |
| 2 | V | 18,5 | 4 | 77,5 | 14 | nein | VE-0 |
| 3 | VI | 18,3 | 4 | 77,7 | 16 | nein | VE-0 |
| 4 | VII | 18,2 | 4 | 77,8 | 18 | nein | VE-0 |
| 5 | XIII | 19,4 | 4 | 76,6 | 13 | nein | VE-0 |
| Vergl.-Vers. | | | | | | | |
| 1 | I | 18,9 | 4 | 77,1 | 3 | nein | VE-0 |
| 2 | II | 18,8 | 4 | 77,2 | 4 | nein | VE-0 |
| 3 | III | 18,6 | 4 | 77,4 | 6 | nein | VE-0 |
| 4 | VIII | 18,4 | 4 | 77,6 | 17 | ja | VE-0 |
| 5 | IX | 18,3 | 4 | 77,7 | 18 | ja | VE-0 |
| 6 | XII | 19,8 | 4 | 76,2 | 3 | nein | VE-0 |

## Patentansprüche

1. Thermoplastische Formmassen, enthaltend

A wenigstens ein thermoplastisches Harz,

B 2 bis 35 Gewichtsteile, bezogen auf 100 Gewichtsteile A, eines Brandschutzmittels, d.i. einer im wesentlichen 2 Bestandteile $b_1$) und $b_2$) enthaltenden Mischung Chlor und/oder Brom enthaltender s-Triazinverbindungen von denen

$b_1$) eine Trisphenoxy-s-triazinverbindung der Formel

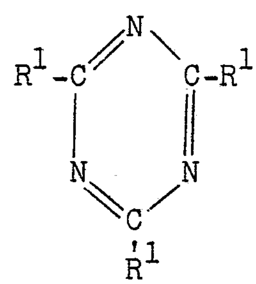

darstellt, und

$b_2$) der Formel

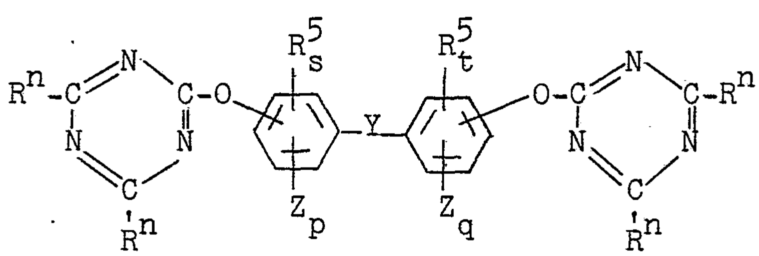

genügt, wobei die Reste die folgenden Bedeutungen haben:

$R^n$: OH, $R^1$, $R^2$ oder $R^3$

$R^1$: 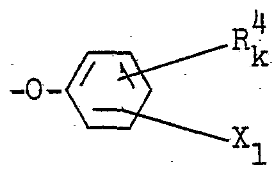

$R^4$: niedere Alkylgruppe oder niedere Halogenalkylgruppe
X: Br oder Cl
k,l: 0 oder eine ganze Zahl von 1 bis 5
$k+l = 5$

$R^2$: 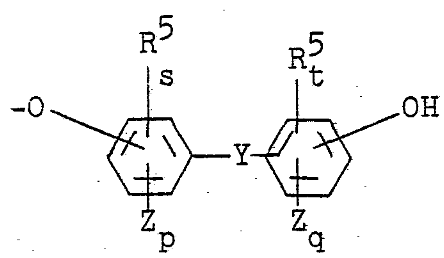

$R^5$: eine niedere Alkylgruppe oder eine niedere Halogenalkylgruppe
Z: Br oder Cl
p,q: 0 oder eine ganze Zahl von 1 bis 4
s,t: 0 oder eine ganze Zahl von 1 bis 4

$$p + q + s + t \leqq 8$$
$$l + p + q \geqq 2$$

Y: eine niedere Alkylengruppe, eine niedere Halogenalkylengruppe oder eine niedere Alkylidengruppe, oder $-SO_2-$, $-SO-$, $-S-$, $-O-$, $-CO-$ oder eine direkte Bindung

$R^3$: 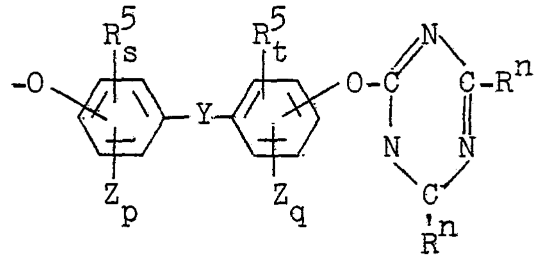

$R^n$, $R^5$, Z, Y, p, q, s, t: wie oben angegeben

C 1 bis 10 Gewichtsteile, bezogen auf 100 Gewichtsteile A eines üblichen Synergisten für das Flammschutzmittel, gegebenenfalls enthaltend

D übliche Zusatzstoffe in wirksamen Mengen,

dadurch gekennzeichnet, daß als Brandschutzmittel eine Mischung verwendet wird, die einen Anteil von 48 bis 62 Gew.%, der Verbindung $b_1$), bezogen auf $b_1$) und $b_2$) aufweist.

2. Formmasse nach Anspruch 1, dadurch gekennzeichnet, daß das thermoplastische Harz ein überwiegend Polybutadien enthaltendes Styrol-Acrylnitril-Copolymerisat ist.

3. Formteile aus Formmassen nach Anspruch 1.

Europäisches Patentamt

# EUROPÄISCHER RECHERCHENBERICHT

0050221

Nummer der Anmeldung

EP 81 10 7475

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| DA | DE - A - 2 727 650 (ASAKI GLASS CO.) * Ansprüche 1,7; Seite 16, Zeilen 1-9; Seite 19 - Seite 20, Zeile 9 * | 1-3 |
| | -- | |
| AD | US - A - 3 843 650 (R. PEWS et al.) * Insgesamt * | 1-3 |
| | ---- | |

KLASSIFIKATION DER ANMELDUNG (Int. Cl.³)

C 08 K 5/34
C 08 L 55/02

RECHERCHIERTE SACHGEBIETE (Int. Cl.³)

C 08 K 5/00
5/34
C 08 L 55/02
C 07 D 251/34

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 22-01-1982 | HOFFMANN |